# EUROPÄISCHE PATENTSCHRIFT

(11) **EP 4 308 285 B1**
(45) Veröffentlichungstag und Bekanntmachung des Hinweises auf die Patenterteilung: **26.02.2025**
(21) Anmeldenummer: 22711060.8
(22) Anmeldetag: 08.03.2022
(51) Int. Cl.: B01J 8/44

(54) **FLIESSBETT- ODER WIRBELSCHICHTREAKTOR ZUR BEHANDLUNG VON OXIDISCHEM FEINERZ, INSBESONDERE EISENERZ, UND VERFAHREN ZUR HERSTELLUNG SOLCH EINES FLIESSBETTREAKTORS**
FLUIDIZED BED OR FLUIDIZED BED REACTOR FOR TREATING OXIDIC FINE ORE, IN PARTICULAR IRON ORE, AND METHOD FOR PRODUCING SUCH A FLUIDIZED BED REACTOR
RÉACTEUR DE RÉDUCTION EN LIT FLUIDISÉ DESTINÉ AU TRAITEMENT DES FINES DE MINERAI OXYDIQUES, EN PARTICULIER DU MINERAI DE FER, ET PROCÉDÉ DE FABRICATION D'UN TEL RÉACTEUR DE RÉDUCTION EN LIT FLUIDISÉ

(30) Priorität: 16.03.2021 EP 21162713
(43) Veröffentlichungstag der Anmeldung: 24.01.2024
(73) Patentinhaber: Primetals Technologies Austria GmbH, 4031 Linz (AT)
(72) Erfinder: HIEBL, Bernhard, 4073 Wilhering (AT); REIN, Norbert, 1060 Wien (AT); WOLFINGER, Thomas, 4030 Linz (AT); WURM, Johann, 4283 Bad Zell (AT)
(74) Vertreter: Metals@Linz
(86) Internationale Anmeldenummer: PCT/EP2022/055897
(87) Internationale Veröffentlichungsnummer: WO 2022/194619

(56) Entgegenhaltungen:
- EP-A2- 0 544 289
- WO-A1-03/068380
- WO-A1-2020/187672
- DE-A1- 102010 023 010
- DE-T2- 69 531 374

## Beschreibung

### Beschreibung

Fließbett- oder wirbelschichtreactor zus Behandlung von oxidischem Feinerz, insbeson-dere Eisenzer, und Verfahren zur Herstellung solch eines Fließbettreaktor.

Die Erfindung betrifft einen Fließbettreaktor gemäß Patentanspruch 1 und ein Verfahren zur Herstellung des Fließbettreaktors gemäß Patentanspruch 15.

Aus DE 69 531 374 T2 ist eine Gasphasenverteilerplatte für einen Gasphasenpolymerisationsapparat bekannt.

Aus EP 0 544 289 A2 ist eine Vorrichtung und ein Verfahren zur Sprühbeschichtung von Partikeln mit Hydroxypropylmethylcellulosephthalat in einer vorgegebenen Konzentrationen in einem Lösungsmittelgemisch aus Dichlormethan und Ethanol bekannt.

Aus WO 2020/187672 A1 ist ein Verfahren zur Direktreduktion von oxidischen Eisenträgerpartikeln zu einem Reduktionsprodukt in einem Fließbettreaktor bekannt. Durch eine Reaktion des Reaktionsgases mit dem Feinerz in der Behandlung des Feinerzes stellt sich in einem Fließbett eine Temperatur zwischen 500 °C und 900 °C ein. Da das Fließbett direkt oberhalb des Verteilerbodens sich ausbildet und im Falle der Wasserstoffreduktion der einströmende Wasserstoff heißer als die Temperatur des Fließbettes ist, wird der Verteilerboden ebenso auf die Temperatur zwischen 500 °C und 900 °C erwärmt und thermisch hoch belastet. Dies führt zu einer hohen Temperaturbelastung des Fließbettreaktors.

Es ist Aufgabe der Erfindung, einen verbesserten, temperaturstabilen Fließbettreaktor zur Behandlung von oxidischem Feinerz, insbesondere Eisenerz, und ein verbessertes Verfahren zur Herstellung des Fließbettreaktors bereitzustellen.

Diese Aufgabe wird mittels eines Fließbettreaktors gemäß Patentanspruch 1 und eines Verfahrens zur Herstellung des Fließbettreaktors gemäß Patentanspruch 15 gelöst. Vorteilhafte Ausführungsformen sind in den abhängigen Ansprüchen angegeben.

Es wurde erkannt, dass ein verbesserter Fließbettreaktor zur Behandlung von oxidischem Feinerz, insbesondere Eisenerz, dadurch bereitgestellt werden kann, dass der Fließbettreaktor einen Verteilerboden, einen Verteilerraum und einen Reaktor mit einem Reaktorraum aufweist. Der Verteilerboden trennt den Reaktorraum räumlich vom Verteilerraum ab. Der Verteilerboden weist eine erste Verteilerplatte und eine auf der ersten Verteilerplatte angeordnete zweite Verteilerplatte auf. Die erste Verteilerplatte ist auf einer zum Verteilerraum zugewandten Seite und die zweite Verteilerplatte ist auf einer dem Reaktorraum zugewandten Seite angeordnet. Die erste Verteilerplatte weist eine erste Anordnung aus sich vom Verteilerraum in einer ersten Richtung zum Reaktorraum erstreckenden ersten Durchgangsöffnungen auf. Die zweite Verteilerplatte weist einen plattenförmig ausgebildeten und parallel zu der ersten Verteilerplatte verlaufenden Anlageabschnitt auf. Ferner weist die zweite Verteilerplatte eine zweite Anordnung aus einer Vielzahl von Abdeckabschnitten auf. Der Anlageabschnitt liegt beabstandet zu der ersten Anordnung der ersten Durchgangsöffnungen an der ersten Verteilerplatte an. Vorzugsweise ist der Anlageabschnitt mit der ersten Verteilerplatte verbunden, vorzugsweise verschweißt. Jeweils ein Abdeckabschnitt der zweiten Anordnung ist beabstandet in der ersten Richtung zu einer zugeordneten ersten Durchgangsöffnung angeordnet und deckt die zugeordnete erste Durchgangsöffnung zum Reaktorraum ab. Die zweite Verteilerplatte weist an jedem der Abdeckabschnitte eine in einer zweiten Richtung geneigt zu der ersten Richtung versetzt zu der ersten Durchgangsöffnung angeordnete zweite Durchgangsöffnung auf. Über die ersten Durchgangsöffnungen und die zweiten Durchgangsöffnungen ist ein Reaktionsgas zur Behandlung des Feinerzes und zur Ausbildung eines Fließbetts aus Feinerz und Reaktionsgas in den Reaktor einleitbar. Die erste Verteilerplatte ist umfangsseitig fluiddicht mit dem Reaktor verbunden, sodass das Reaktionsgas ausschließlich über die ersten Durchgangsöffnungen und die zweiten Durchgangsöffnungen in den Reaktorraum strömen kann.

Diese Ausgestaltung hat den Vorteil, dass ein besonders gutes und gleichmäßiges Fließbett bereitgestellt werden kann, um das Feinerz mit dem Reaktionsgas zu behandeln. Dabei kann die Behandlung eine Reduktion und/oder eine Oxidation des Feinerzes mit dem Reaktionsgas beinhalten. Ferner hat diese Ausgestaltung den Vorteil, dass bei Abstellen des Fließbettreaktors und/oder bei einem Ausfall einer Zuführung des Reaktionsgases ein Verschütten bzw. ein Verstopfen der ersten Durchgangsöffnung bzw. ein Ausfließen zum darunterliegenden Verteilerraum durch das Abdecken der ersten Durchgangsöffnung mittels jeweils eines zugeordneten Abdeckabschnitts verhindert wird.

Des Weiteren ist die zweite Verteilerplatte fertigungstechnisch besonders einfach und kostengünstig herstellbar. Insbesondere kann darauf verzichtet werden, einzelne Abdecckappen jeweils an der ersten Verteilerplatte positionieren zu müssen und jeweils befestigen zu müssen. Durch die in der zweiten Verteilerplatte vorgesehene Anordnung von einer Vielzahl von Abdeckabschnitten ist in der Montage des Fließbettreaktors nur ein Positionierschritt zur Ausrichtung der zweiten Verteilerplatte gegenüber der ersten Verteilerplatte notwendig.

In einer weiteren Ausführungsform schließt sich jeweils ein Abdeckabschnitt direkt an den Anlageabschnitt an. Vorzugsweise ist der Abdeckabschnitt umfangsseitig durch den Anlageabschnitt umschlossen. Diese Ausgestaltung stellt eine gute thermisch stabile Anbindung des jeweiligen Abdeckabschnitts mit dem Anlageabschnitt sicher, sodass in der zweiten Verteilerplatte Spannungsrisse vermieden werden.

In einer weiteren Ausführungsform verbindet der Anlageabschnitt die versetzt zueinander angeordneten Abdeckabschnitte der zweiten Anordnung miteinander mechanisch. Der Anlageabschnitt ist mechanisch mit der ersten Verteilerplatte verbunden. Vorzugsweise ist die zweite Verteilerplatte einstückig und materialeinheitlich ausgebildet, wobei vorzugsweise die zweite Anordnung aus Abdeckabschnitten in die zweite Verteilerplatte eingeprägt ist. Diese Ausgestaltung hat den Vorteil, dass die Herstellung der zweiten Verteilerplatte besonders einfach und kostengünstig ist. Ferner ist die zweite Verteilerplatte dadurch besonders thermisch und mechanisch robust.

In einer weiteren Ausführungsform begrenzen die erste Verteilerplatte und der Abdeckabschnitt jeweils eine Kammer. Die Kammer erstreckt zwischen der ersten Durchgangsöffnung und der zweiten Durchgangsöffnung parallel zu der ersten Verteilerplatte in der zweiten Richtung. Die Kammer hat den Vorteil, dass das über die erste Durchgangsöffnung strömende Reaktionsgas umgelenkt wird. Ferner kann eine Strömungsgeschwindigkeit des Reaktionsgases gegenüber einer Strömungsgeschwindigkeit in der ersten Durchgangsöffnung reduziert werden, sodass lokale Strömungsüberhöhungen, auch als Jets bezeichnet, in dem Fließbett vermieden werden.

In einer weiteren Ausführungsform weisen die Kammer eine Kammerquerschnittsfläche, die erste Durchgangsöffnung eine erste Querschnittsfläche und die zweite Durchgangsöffnung eine zweite Querschnittsfläche auf, wobei die zweite Querschnittsfläche größer als die erste Querschnittsfläche ist, wobei die Kammerquerschnittsfläche größer als die zweite Querschnittsfläche ist. Diese Ausgestaltung hat den Vorteil, dass Druckschwankungen in dem Reaktionsgas durch die große Kammerquerschnittsfläche und die groß ausgebildete Kammer reduziert werden können. Beim Ausströmen des Reaktionsgases aus der Kammer über die zweite Durchgangsöffnung wird eine Strömungsgeschwindigkeit gegenüber der Strömungsgeschwindigkeit des Reaktionsgases in der Kammer wieder erhöht. Dadurch bildet sich ein besonders stabiles und gleichmäßiges Fließbett im Reaktorraum aus. Ferner wird sichergestellt, dass das Reaktionsgas mit einer geringeren Strömungsgeschwindigkeit als in der ersten Durchgangsöffnung in den Reaktorraum einströmt, über den Querschnitt des Reaktorraumes gleichmäßig verteilt wird.

In einer weiteren Ausführungsform weist die Kammer in der zweiten Richtung zwischen der ersten Durchgangsöffnung und der zweiten Durchgangsöffnung eine Kammerlänge I auf. Die zweite Durchgangsöffnung weist in der ersten Richtung eine Öffnungshöhe h auf. Die Öffnungshöhe der zweiten Durchgangsöffnung ist geringer als die Kammerlänge I. Vorzugsweise beträgt ein Verhältnis der Kammerlänge I zu der der Öffnungshöhe h von 1 bis einschließlich 20, vorzugsweise von einschließlich 5 bis einschließlich 15. Diese Ausgestaltung hat den Vorteil, dass bei einem Ausfall der Förderung des Reaktionsgases in den Verteilerraum oder bei Abschalten der Zuführung des Reaktionsgases sich das Feinerz ohne Probleme auf dem Abdeckabschnitt oberseitig ablegen kann. Das Feinerz bildet in der Kammer einen Schüttkegel mit einem Schüttwinkel aus, jedoch reicht der Schüttkegel nicht bis zu der ersten Durchgangsöffnung. Dadurch wird ein Verstopfen der ersten Durchgangsöffnung bzw. das Ausfließen des Feinerzes in den darunterliegenden Verteilerraumes vermieden. Des Weiteren kann bei Wiederanfahren des Fließbettreaktors ohne Weiteres das in die Kammer eingedrungene Feinerz des Schüttkegels mittels des Reaktionsgases aus der Kammer ausgeblasen werden.

In einer weiteren Ausführungsform überdeckt die zweite Verteilerplatte eine erste Oberseite der ersten Verteilerplatte im Wesentlichen in der ersten Richtung zumindest im Bereich der ersten Anordnung, vorzugsweise im Wesentlichen vollständig.

In einer weiteren Ausführungsform weist der Verteilerboden wenigstens einen ersten Bereich und einen zweiten Bereich auf, wobei in dem ersten Bereich die zweiten Durchgangsöffnungen der zweiten Anordnung jeweils eine identische erste Ausrichtung aufweisen. In dem zweiten Bereich weisen die zweiten Durchgangsöffnungen der zweiten Anordnung jeweils eine zweite Ausrichtung auf, die unterschiedlich zu der ersten Ausrichtung ist. Diese Ausgestaltung hat den Vorteil, dass durch die unterschiedliche Ausrichtung gezielt ein Förderstrom zum Transport des Feinerzes in dem Fließbett erzielt werden kann.

In einer weiteren Ausführungsform weist der Fließbettreaktor eine in den Reaktorraum mündende Einfüllöffnung und eine in den Reaktorraum mündende Entnahmeöffnung auf. Die Einfüllöffnung ist gegenüberliegend (in Längsrichtung) zur Entnahmeöffnung angeordnet. Über die Einfüllöffnung ist das Feinerz in den Reaktorraum förderbar. Über die Entnahmeöffnung ist ein Reaktionsprodukt aus einer Reaktion des Feinerzes mit dem Reaktionsgas aus dem Reaktorraum förderbar. Der erste Bereich ist zwischen der Einfüllöffnung und der Entnahmeöffnung angeordnet. In dem ersten Bereich ist die zweite Durchgangsöffnung jeweils auf einer der Entnahmeöffnung zugewandten Seite des Abdeckabschnitts angeordnet. Dadurch wird das Feinerz während der Verweildauer im Reaktorraum von der Einfüllöffnung in Richtung der Entnahmeöffnung durch das Reaktionsgas transportiert.

In einer weiteren Ausführungsform ist der zweite Bereich zwischen der Einfüllöffnung und dem ersten Bereich angeordnet. Die zweite Durchgangsöffnung im zweiten Bereich ist auf einer der Einfüllöffnung abgewandten Seite und auf einer einem Seitenrand des Verteilerbodens zugewandten Seite derart angeordnet, dass das Feinerz von der Einfüllöffnung in Richtung des Seitenrands mittels des ausströmenden Reaktionsgases verteilbar ist. Dadurch kann eine lokale Anhäufung von Feinerz in dem Fließbett vermieden und der gesamte Querschnitt des Fließbettes gleichmäßig genutzt werden.

In einer weiteren Ausführungsform weist der Verteilerboden einen dritten Bereich auf, wobei der dritte Bereich zwischen dem ersten Bereich und der Entnahmeöffnung angeordnet ist. In dem dritten Bereich weisen die zweiten Durchgangsöffnungen jeweils eine zur ersten Ausrichtung unterschiedliche dritte Ausrichtung auf, wobei die zweite Durchgangsöffnung im dritten Bereich jeweils auf einer der Entnahmeöffnung zugewandten Seite und auf einer einem Seitenrand des Verteilerbodens abgewandten Seite des Abdeckabschnitts derart angeordnet ist, dass das Feinerz und/oder ein Reaktionsprodukt aus einer Reaktion des Feinerzes mit dem Reaktionsgas mittels des ausströmenden Reaktionsgases von dem Seitenrand in Richtung der Entnahmeöffnung förderbar/konzentrierbar ist. Dadurch kann das Reaktionsprodukt und/oder können die Reste von dem Feinerz besonders einfach über die Entnahmeöffnung aus dem Reaktorraum gefördert werden.

In einer weiteren Ausführungsform weist der Verteilerboden wenigstens einen Randbereich auf, wobei der Randbereich zwischen dem ersten Bereich und der Entnahmeöffnung und seitlich angrenzend an einen Seitenrand des Verteilerbodens angeordnet ist, wobei die zweite Durchgangsöffnung im Randbereich jeweils auf einer der Entnahmeöffnung zugewandten Seite und auf einer dem Seitenrand des Verteilerbodens zugewandten Seite des Abdeckabschnitts derart angeordnet ist, dass das Feinerz und/oder ein Reaktionsprodukt aus einer Reaktion des Feinerzes mit dem Reaktionsgas mittels des ausströmenden Reaktionsgases in Richtung der Entnahmeöffnung förderbar ist. Diese Ausgestaltung hat den Vorteil, den Randbereich des Fließbettes besonders gut zu fluidisieren und damit negative Randeffekte auf das Fluidisierungsverhalten des Feinerzes und/oder Reaktionsproduktes zu minimieren.

In einer weiteren Ausführungsform ist die zweite Durchgangsöffnung schlitzförmig ausgebildet, wobei die zweite Durchgangsöffnung in der ersten Richtung im Wesentlichen eine konstante Öffnungshöhe aufweist. Diese Ausgestaltung hat den Vorteil, dass eine Anlagerung von Partikeln des Feinerzes in der zweiten Durchgangsöffnung vermieden wird.

In einer weiteren Ausführungsform sind umfangsseitig bezogen auf die Gerade jeweils um eine erste Durchgangsöffnung die erste Verteilerplatte und der Anlageabschnitt abgedichtet. Von besonderem Vorteil ist, wenn vorzugsweise umfangsseitig um die erste Durchgangsöffnung jeweils der Anlageabschnitt stoffschlüssig mit der ersten Verteilerplatte verbunden, vorzugsweise verschweißt, ist. Dadurch kann ein Überströmen von Reaktionsgas von der einen Kammer in die nächste Kammer zwischen der ersten und zweiten Verteilerplatte vermieden werden.

In einer weiteren Ausführungsform weist der Abdeckabschnitt einen ersten Teilbereich und einen zweiten Teilbereich auf, wobei der erste Teilbereich parallel zu der ersten Verteilerplatte verlaufend angeordnet ist. Der erste Teilbereich überdeckt die erste Durchgangsöffnung zumindest abschnittsweise. Der zweite Teilbereich ist schräg geneigt zu dem ersten Teilbereich angeordnet und verbindet den ersten Teilbereich mit dem Anlageabschnitt. Diese Ausgestaltung hat den Vorteil, dass die zweite Verteilerplatte mechanisch besonders spannungsarm ausgebildet ist und dadurch beim Anfahren des Fließbettreaktors und einer damit verbundenen Temperaturerhöhung im Fließbettreaktor auf 750 bis 950 °C, eine ungewollte thermische Verformung der zweiten Verteilerplatte zuverlässig vermieden werden kann.

Von besonderem Vorteil ist, wenn die zweite Anordnung aus Abdeckabschnitten in die zweite Verteilerplatte eingeprägt ist. Dadurch ist sichergestellt, dass die Abdeckabschnitte im Wesentlichen identisch zueinander ausgebildet sind und der Verteilerboden besonders kostengünstig herstellbar ist.

Von besonderem Vorteil ist, wenn im Verfahren zur Herstellung des Fließbettreaktors die erste Verteilerplatte mit der ersten Anordnung von ersten Durchgangsöffnungen bereitgestellt wird. In ein plattenförmiges Blechmaterial wird die zweite Anordnung der Abdeckabschnitte eingeprägt und die zweiten Durchgangsöffnung werden in das Blechmaterial geschnitten, vorzugsweise gestanzt. Die zweite Verteilerplatte wird derart an der ersten Verteilerplatte angeordnet, dass jeweils die erste Durchgangsöffnung durch jeweils einen zugeordneten Abdeckabschnitt abgedeckt wird. Der Anlageabschnitt wird mit der ersten Verteilerplatte mechanisch verbunden.

Nachfolgend wird die Erfindung anhand von FIGN näher erläutert. Dabei zeigen:
- FIG 1: eine schematische Darstellung eines Fließbettreaktors gemäß einer ersten Ausführungsform;
- FIG 2: einen in FIG 1 markierten Ausschnitt A des in FIG 1 gezeigten Verteilerbodens;
- FIG 3: einen in FIG 2 markierten Ausschnitt B der in FIG 2 gezeigten Schnittansicht;
- FIG 4: eine perspektivische Darstellung des Verteilerbodens mit Blickrichtung schräg auf die zweite Verteilerplatte;
- FIG 5: eine schematische Darstellung einer Draufsicht auf einen Fließbettreaktor gemäß einer zweiten Ausführungsform; und
- FIG 6: eine schematische Darstellung einer Draufsicht auf einen Fließbettreaktor gemäß einer dritten Ausführungsform.

In den nachfolgenden FIGN wird zum erleichterten Verständnis auf ein Koordinatensystem Bezug genommen. Das Koordinatensystem ist beispielhaft als Rechtssystem ausgebildet und weist eine x-Achse (Längsrichtung), eine y-Achse (Querrichtung) und eine z-Achse (Höhenrichtung) auf.

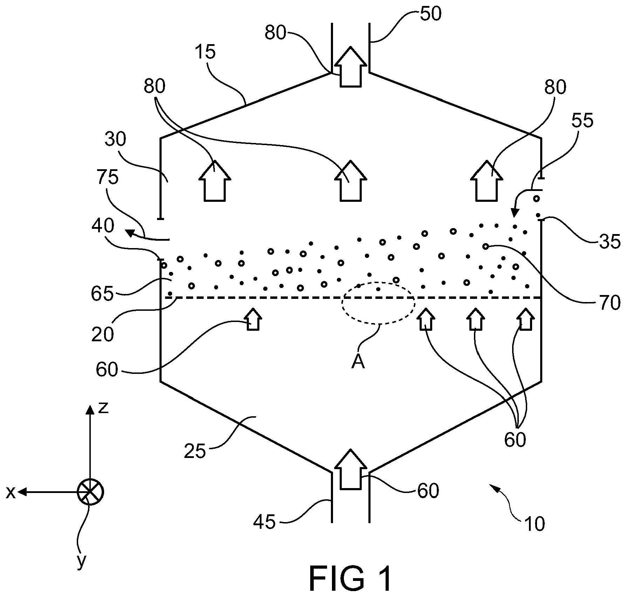

FIG 1 zeigt eine schematische Darstellung eines Fließbettreaktors 10 gemäß einer ersten Ausführungsform.

Der Fließbettreaktor 10 kann Teil einer Reaktoranordnung aus mehreren Fließbettreaktoren 10 sein. Der Fließbettreaktor 10 weist beispielhaft einen Reaktor 15, einen Verteilerboden 20 und einen Verteilerraum 25 auf. Der Reaktor 15 weist einen Reaktorraum 30 auf. Ferner weist der Fließbettreaktor 10 eine Einfüllöffnung 35, eine Entnahmeöffnung 40 sowie eine Reaktionsgaszuführung 45 zum Verteilerraum und eine Reaktionsgasabführung 50 aus dem Reaktorraum auf. Der Verteilerboden 20 trennt räumlich den Verteilerraum 25 von dem Reaktorraum 30 ab. Beispielhaft ist in FIG 1 der Verteilerraum 25 unterhalb des Reaktorraums 30 angeordnet.

Die Einfüllöffnung 35 sowie die Entnahmeöffnung 40 münden in den Reaktorraum 30 und sind seitlich am Reaktor 15 angeordnet. Die Einfüllöffnung 35 ist an einer Seite des Reaktors 15 angeordnet. In x-Richtung gegenüberliegend kann zu der Einfüllöffnung 35 die Entnahmeöffnung 40 angeordnet sein. Dabei ist die Entnahmeöffnung 40 in z-Richtung beispielhaft näher am Verteilerboden 20 angeordnet als die Einfüllöffnung 35. In z-Richtung oberhalb der Einfüllöffnung 35 ist die Reaktionsgasabführung 50 angeordnet. Der Verteilerboden 20 kann derart leicht schräg geneigt zu einer xy-Ebene ausgerichtet sein, so dass der Verteilerboden 20 unterhalb der Einfüllöffnung 35 leicht höher angeordnet ist als an der Entnahmeöffnung 40.

Über die Einfüllöffnung 35 kann im Betrieb des Fließbettreaktors 10 ein oxidisches Feinerz 55, insbesondere ein Eisenerz, in den Reaktorraum 30 gefördert werden. Das Feinerz 55 weist vorzugsweise wenigstens 90 Massenprozent Eisenträgerpartikel 70 mit einer Korngröße kleiner oder gleich 200 µm auf, vorzugsweise mit einem d₃₀ kleiner oder gleich 110 µm. Die Eisenpartikelträger 70 können oxidisch sein und beispielsweise Fe₂O₃ aufweisen.

Über die Entnahmeöffnung 40 kann ein Reaktionsprodukt 75 des behandelten Feinerzes 55 aus dem Reaktorraum 30 gefördert werden. Oberseitig des Reaktorraums 30 kann die Reaktionsgasabführung 50 angeordnet sein und in den Reaktorraum 30 münden. Die Reaktionsgaszuführung 45 ist beispielhaft unterseitig an dem Fließbettreaktor 10 angeordnet und mündet in den Verteilerraum 25.

Im Betrieb des Fließbettreaktors 10 wird vorzugsweise kontinuierlich über die Einfüllöffnung 35 das Feinerz 55 in den Reaktorraum 30 zugefördert. Ferner wird beispielsweise kontinuierlich über die Reaktionsgaszuführung 45 ein Reaktionsgas 60 in den Verteilerraum 25 geführt. Der Verteilerraum 25 ist über den Verteilerboden 20 fluidisch mit dem Reaktorraum 30 verbunden. Beispielhaft ist dabei der Reaktorraum 30 oberhalb des Verteilerbodens 20 und der Verteilerraum 25 unterhalb des Verteilerbodens 20 angeordnet. Dabei kann der Verteilerboden 20 in einer xy-Ebene angeordnet sein.

Das Reaktionsgas 60 wird über die Reaktionsgaszuführung 45 vorzugsweise druckbeaufschlagt in den Verteilerraum 25 eingeführt. Das Reaktionsgas 60 wird durch den Verteilerboden 20 im Verteilerraum 25 verteilt und tritt über den Verteilerboden 20 in den Reaktorraum 30 ein. Diese Strömungsrichtung stellt sich aufgrund einer Druckdifferenz des Reaktionsgases 60 zwischen der Reaktionsgaszuführung 45 und der Reaktionsgasabführung 50 ein.

Das Reaktionsgas 60 wird derart durch den Verteilerboden 20 in den Reaktorraum 30 geführt, dass sich oberhalb des Verteilerbodens 20 ein Fließbett 65 aus dem Feinerz 55 und dem Reaktionsgas 60 ausbildet. Das Fließbett 65 kann auch als Wirbelschicht bezeichnet werden. In dem Fließbett 65 wird das Feinerz 55 durch das aufwärtsströmende Reaktionsgas 60 in einen fluidisierten Zustand versetzt.

In z-Richtung erstreckt sich das Fließbett 65 zwischen dem Verteilerboden 20 und einer unteren Kante der Entnahmeöffnung 40. In x- und/oder y-Richtung erstreckt sich das Fließbett 65 im Wesentlichen über eine gesamte Erstreckung des Verteilerbodens 20.

Das Reaktionsgas 60 kann insbesondere als Reduktionsgas ausgebildet sein. So kann beispielsweise das Reaktionsgas 60 Wasserstoff H₂ aufweisen und insbesondere aus technischem reinem Wasserstoff H₂ bestehen oder eine Mischung aus Wasserstoff H₂ mit einem oder mehreren weiteren Gasen aufweisen.

Im Fließbett 65 reagiert das Reaktionsgas 60 mit dem Feinerz 55 zu dem Reaktionsprodukt 75. Beispielsweise wirkt der Wasserstoff H₂ reduzierend auf die oxidischen Eisenpartikelträger 70.

Das Reaktionsprodukt 75 kann beispielsweise ein Eisenschwamm, beispielsweise mit einem Metallisierungsgrad von über 90 % sein. Das Reaktionsprodukt 75 weist beispielsweise einen höheren Metallisierungsgrad auf als das über die Einfüllöffnung 35 zugeführte Feinerz 55. Der Metallisierungsgrad ist dabei ein Verhältnis eines Massenanteils von metallisch vorliegendem Eisen zum gesamten vorhandenen Eisen im Reaktionsprodukt 75. Es wird darauf hingewiesen, dass je nach Verfahrensführung in dem Fließbettreaktor 10 der Metallisierungsgrad des Reaktionsprodukts 75 unterschiedlich sein kann.

Durch die Reaktion des Reaktionsgases 60 mit dem Feinerz 55 in der Behandlung des Feinerzes 55 stellt sich im Fließbett 65 eine Temperatur zwischen 500 °C und 900 °C ein. Da das Fließbett 65 direkt oberhalb des Verteilerbodens 20 sich ausbildet, wird der Verteilerboden 20 ebenso auf die Temperatur zwischen 500 °C und 900 °C erwärmt.

Ferner werden in dem Fließbett 65 das Feinerz 55 und dessen Eisenpartikelträger 70 und das Reaktionsprodukt 75 von der Einfüllöffnung 35 hin zu der Entnahmeöffnung 40 transportiert, wobei an der Entnahmeöffnung 40 das Reaktionsprodukt 75 des Feinerzes 55 mit dem Reaktionsgas 60 aus dem Reaktorraum 30 entnommen wird.

Ein verbrauchtes Reaktionsgas 80 wird aufgrund der Druckdifferenz zwischen der Reaktionsgaszuführung 45 und der Reaktionsgasabführung 50 über die Reaktionsgasabführung 50 aus dem Reaktorraum 30 abgeführt. Das verbrauchte Reaktionsgas 80 kann beispielsweise Wasserdampf aufweisen.

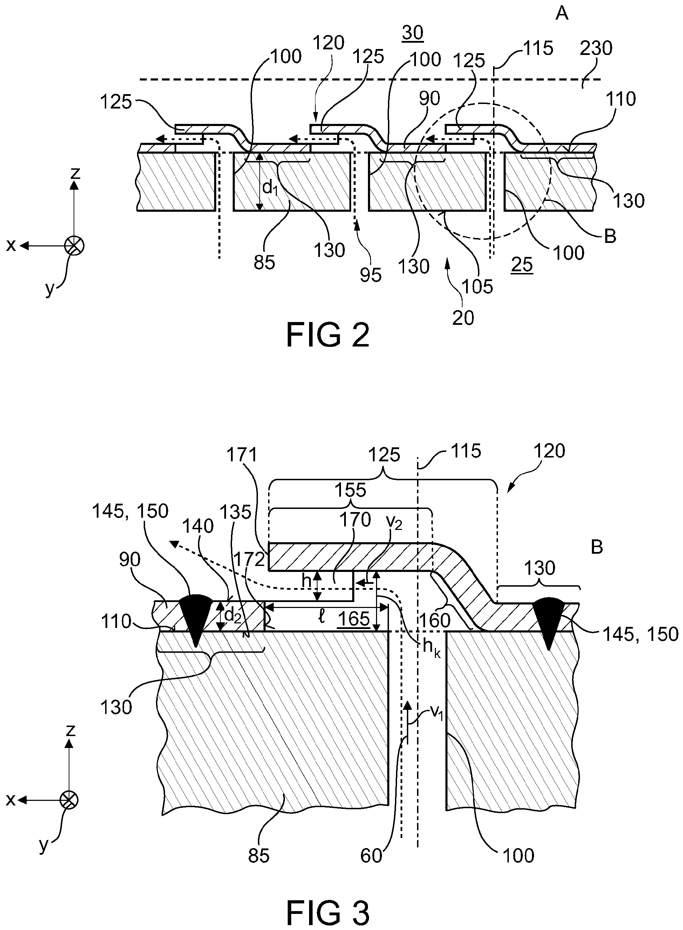

FIG 2 zeigt einen in FIG 1 markierten Ausschnitt A des in FIG 1 gezeigten Verteilerbodens 20.

Der Verteilerboden 20 weist eine erste Verteilerplatte 85 und eine zweite Verteilerplatte 90 auf. Die erste Verteilerplatte 85 ist unterhalb der zweiten Verteilerplatte 90 angeordnet. Dabei ist die erste Verteilerplatte 85 auf einer dem Verteilerraum 25 zugewandten Seite angeordnet. Die erste Verteilerplatte 85 ist plattenförmig ausgebildet und erstreckt sich im Wesentlichen in einer xy-Ebene.

Die erste Verteilerplatte 85 weist eine erste Unterseite 105 und eine erste Oberseite 110 auf, wobei die erste Oberseite 110 auf einer dem Reaktorraum 30 zugewandten Seite angeordnet ist. Die erste Unterseite 105 grenzt an den Verteilerraum 25 an. Die erste Verteilerplatte 85 weist eine erste Materialstärke d₁ auf.

Die erste Verteilerplatte 85 weist eine erste Anordnung 95 von ersten Durchgangsöffnungen 100 auf. In der Ausführungsform ist eine Vielzahl von ersten Durchgangsöffnungen 100 in der ersten Verteilerplatte 85 eingebracht. Beispielhaft sind die ersten Durchgangsöffnungen 100 identisch zueinander ausgebildet, sodass das im Folgenden für eine der ersten Durchgangsöffnungen 100 Erläuterte ebenso für die weiteren ersten Durchgangsöffnungen 100 gilt. Selbstverständlich können die ersten Durchgangsöffnungen 100 auch unterschiedlich zueinander ausgebildet sein.

Die erste Durchgangsöffnung 100 erstreckt sich von der ersten Unterseite 105, also vom Verteilerraum 25, entlang einer Geraden 115, die im Wesentlichen parallel zur z-Achse normal zur ersten Verteilerplatte 85 ausgerichtet ist, in einer ersten Richtung hin zu der ersten Oberseite 110 und somit zum Reaktorraum 30. Die erste Durchgangsöffnung 100 kann beispielsweise einen kreisförmigen Querschnitt aufweisen. Eine erste Querschnittsfläche der ersten Durchgangsöffnung 100 kann beispielsweise 0,5 mm² bis 3 mm² betragen.

Auf der ersten Oberseite 110 ist die zweite Verteilerplatte 90 angeordnet. Die zweite Verteilerplatte 90 weist eine zweite Anordnung 120 von Abdeckabschnitten 125 und einen Anlageabschnitt 130 auf.

FIG 3 zeigt einen in FIG 2 markierten Ausschnitt B der in FIG 2 gezeigten Schnittansicht.

Die zweite Verteilerplatte 90 ist einstückig und materialeinheitlich ausgebildet und weist beispielsweise ein dünnwandiges Material, insbesondere ein Blechmaterial auf. Dabei wird unter dünnwandig eine zweite Materialstärke von 0,5 mm bis 4 mm verstanden. Die zweite Verteilerplatte 90 weist eine zweite Unterseite 135 und eine zweite Oberseite 140 auf. Die zweite Unterseite 135 ist auf einer der ersten Verteilerplatte 85 und dem Verteilerraum 25 zugewandten Seite angeordnet. Die zweite Oberseite 140 schließt sich an den Reaktorraum 30 an und begrenzt den Reaktorraum 30 unterseitig. Die zweite Verteilerplatte 90 überdeckt die erste Oberseite 110 der ersten Verteilerplatte 85 im Wesentlichen vollständig in der z-Richtung. Dadurch wird die zweite Verteilerplatte 90 mechanisch durch die erste Verteilerplatte 85 gestützt.

Der Anlageabschnitt 130 ist plattenförmig ausgebildet und erstreckt sich in einer xy-Ebene. Dadurch verläuft der Anlageabschnitt 130 parallel zu der ersten Verteilerplatte 85. Mit der zweiten Unterseite 135 liegt der Anlageabschnitt 130 an der ersten Oberseite 110 der ersten Verteilerplatte 85 flächig an. Dabei wird vorzugsweise unter einer flächigen Anlage verstanden, dass die zweite Unterseite 135 des Anlageabschnitts 130 zumindest mit 50 Prozent, vorzugsweise zu wenigstens 70 Prozent, ihres Flächeninhalts in Berührkontakt mit der ersten Oberseite 110 der ersten Verteilerplatte 85 steht.

Vorzugsweise ist der Anlageabschnitt 130 mittels einer stoffschlüssigen Verbindung 145, beispielsweise mit einer Schweißverbindung 150, mit der ersten Verteilerplatte 85 verbunden. Diese Ausgestaltung stellt sicher, dass auch bei thermischer Belastung der zweiten Verteilerplatte 90 ein Ablösen oder Abheben der zweiten Verteilerplatte 90 von der ersten Verteilerplatte 85 verhindert wird.

Der Anlageabschnitt 130 ist in x- und/oder y-Richtung versetzt zu der ersten Durchgangsöffnung 100 angeordnet. Dadurch wird ein Verschließen der ersten Durchgangsöffnung 100 an der ersten Oberseite 110 durch den Anlageabschnitt 130 verhindert. Der Anlageabschnitt 130 weist eine zweite Materialstärke d₂ auf, die deutlich geringer ist, als die erste Materialstärke d₁ der ersten Verteilerplatte 85. Insbesondere kann die zweite Materialstärke von einschließlich 0,5 mm bis einschließlich 4 mm betragen. Von besonderem Vorteil ist, wenn die erste Materialstärke d₁ dicker als die zweite Materialstärke der zweiten Verteilerplatte 90 ist.

Wie bereits oben erläutert weist die zweite Anordnung 120 eine Vielzahl von Abdeckabschnitten 125 auf. Die Abdeckabschnitte 125 sind jeweils in x- und/oder y-Richtung beabstandet zueinander angeordnet. Die Abdeckabschnitte 125 überragen in z-Richtung den Anlageabschnitt 130. Dabei entspricht vorzugsweise eine erste Anzahl von ersten Durchgangsöffnungen 100 einer zweiten Anzahl von Abdeckabschnitten 125.

Mechanisch sind die Abdeckabschnitte 125 jeweils mit dem Anlageabschnitt 130 verbunden. Dadurch sind die Abdeckabschnitte 125 untereinander durch den Anlageabschnitt 130 mechanisch verbunden. Dadurch kann auf eine direkte mechanische Verbindung zwischen Abdeckabschnitt 125 und der ersten Verteilerplatte 85 verzichtet werden.

Im Folgenden wird der in FIG 3 gezeigte Abdeckabschnitt 125 exemplarisch erläutert. Das im Folgenden Erläuterte gilt ebenso für die weiteren Abdeckabschnitte 125 der zweiten Anordnung 120.

Der Abdeckabschnitt 125 ist in die zweite Verteilerplatte 90 eingeprägt und ist in z-Richtung beabstandet zu der ersten Oberseite 110 der ersten Verteilerplatte 85 derart angeordnet, dass die erste Durchgangsöffnung an der ersten Oberseite 110 offen ist. Dabei ist in z-Richtung der Abdeckabschnitt 125 überdeckend zu der ersten Durchgangsöffnung 100 angeordnet. Dabei wird unter einer Überdeckung in z-Richtung verstanden, dass bei Projektion zweier Komponenten, beispielsweise des Abdeckabschnitts 125 und der ersten Durchgangsöffnung 100 oder beispielsweise der zweiten Verteilerplatte 90 und der ersten Verteilerplatte, in z-Richtung, die auch als erste Richtung bezeichnet werden kann, in eine Projektionsebene, die beispielsweise senkrecht zu der z-Richtung/ersten Richtung verläuft und beispielsweise als xy-Ebene ausgebildet ist, sich die Komponenten, in FIG 3 der Abdeckabschnitt 125 und die Durchgangsöffnung 100, in der Projektionsebene überlappen. Dadurch deckt der Abdeckabschnitt 125 die erste Durchgangsöffnung 100 zu dem Reaktorraum 30 hin ab und schützt die erste Durchgangsöffnung gegenüber dem Fließbett 65.

Der Abdeckabschnitt 125 weist einen ersten Teilbereich 155 und einen zweiten Teilbereich 160 auf. Der erste Teilbereich 155 verläuft im Wesentlichen parallel zu der ersten Oberseite 110 und ist in z-Richtung versetzt zu der ersten Oberseite 110 angeordnet. Der erste Teilbereich 155 kann dabei plattenförmig ausgebildet sein. In einer Draufsicht kann der erste Teilbereich 155 kreisförmig in x- und y-Richtung ausgebildet sein.

Der erste Teilbereich 155 ist über den zweiten Teilbereich 160 mit dem Anlageabschnitt 130 mechanisch verbunden. Der zweite Teilbereich 160 kann teilweise über die erste Durchgangsöffnung 100 ragen und verläuft schräg geneigt zu dem ersten Teilbereich 155 und dem Anlageabschnitt 130.

Der Abdeckabschnitt 125 begrenzt zusammen mit der ersten Oberseite 110 der ersten Verteilerplatte 85 eine Kammer 165. Die Kammer 165 erstreckt sich in ihrer Haupterstreckungsrichtung im Wesentlichen in x-Richtung und y-Richtung. Eine Höhe h_{K} der Kammer 165 ist deutlich geringer als die Erstreckung der Kammer 165 in x- und/oder y-Richtung. Ferner ist die Höhe h_{K} der Kammer 165 über die Kammerlänge I beispielsweise konstant.

In der Kammer 165 mündet an der ersten Oberseite 110 die erste Durchgangsöffnung 100. In z-Richtung zwischen dem Anlageabschnitt 130 und dem ersten Teilbereich 155 ist eine zweite Durchgangsöffnung 170 in der zweiten Verteilerplatte 90 eingebracht. Die zweite Durchgangsöffnung 170 ist schlitzartig ausgebildet und weist in z-Richtung im Wesentlichen eine konstante Öffnungshöhe h auf. Die Öffnungshöhe h kann beispielsweise 0,5 mm bis 2 mm betragen. Dabei ist die zweite Durchgangsöffnung 170 derart ausgestaltet, dass eine zweite Querschnittsfläche der zweiten Durchgangsöffnung 170 deutlich größer ist als die erste Querschnittsfläche der ersten Durchgangsöffnung 100. Die Kammer 165 verbindet die erste Durchgangsöffnung 100 mit der zweiten Durchgangsöffnung 170 fluidisch.

Die zweite Durchgangsöffnung 170 kann sich im Wesentlichen über ein Winkelsegment in einer xy-Ebene von beispielsweise 70° bis 120° erstrecken. Dabei verläuft die zweite Durchgangsöffnung beispielhaft auf einer Kreisbahn mit einem Mittelpunkt versetzt zu der Geraden 115. Die zweite Querschnittsfläche bildet dabei eine Öffnungsfläche der zweiten Durchgangsöffnung und ist mathematisch als ein Produkt des Winkelsegments (in Bogenmaß), der Öffnungshöhe h und einer Bogenlänge der zweiten Durchgangsöffnung auf der Kreisbahn in einer xy-Ebene. Dabei ist die zweite Durchgangsöffnung 170 derart in die zweite Verteilerplatte 90 eingeschnitten oder eingestanzt, dass ein freies Ende des ersten Teilbereichs 155, das an die zweite Durchgangsöffnung 170 angrenzt, mit einer Schnittfläche 172 des Anlageabschnitts 130 in z-Richtung überdeckend angeordnet ist.

Die Kammer 165 weist im Wesentlichen eine zylinderförmige Grundform auf. Die Kammer 165 weist eine deutlich größere Kammerquerschnittsfläche (in einer xy-Ebene) auf als die erste Querschnittsfläche und/oder die zweite Querschnittsfläche. In x-Richtung und/oder in y-Richtung weist die Kammer 165 zwischen der zweiten Durchgangsöffnung 170 und der ersten Durchgangsöffnung 100 eine Kammerlänge I auf. Die Kammerlänge I ist deutlich größer als die Öffnungshöhe h der zweiten Durchgangsöffnung 170. Von besonderem Vorteil ist, wenn ein Verhältnis der Kammerlänge I zu der Öffnungshöhe h einschließlich 1 bis einschließlich 20 beträgt.

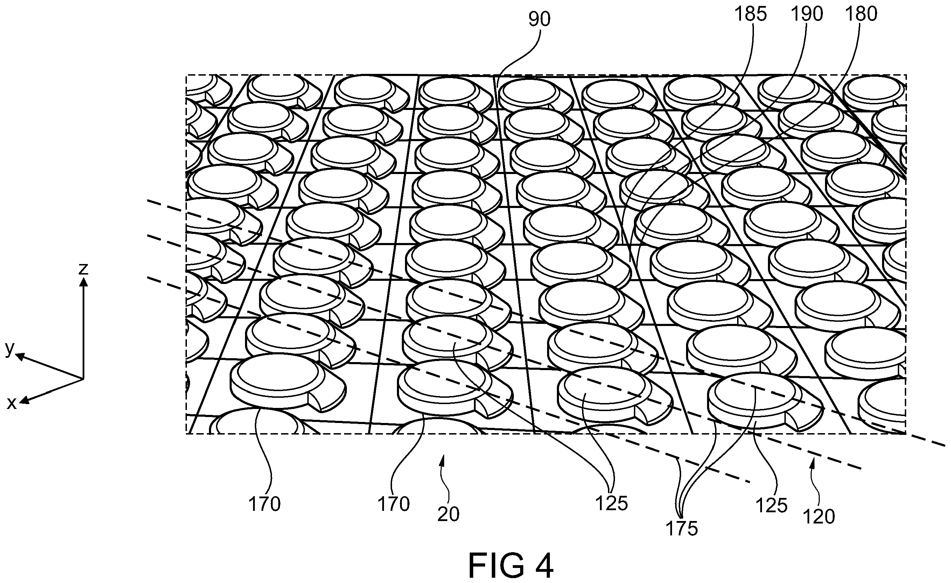

FIG 4 zeigt eine perspektivische Darstellung des Verteilerbodens 20 mit Blickrichtung schräg auf die zweite Verteilerplatte 90.

Die Abdeckabschnitte 125 der zweiten Anordnung 120 sind beispielhaft in mehreren in x-Richtung zueinander versetzt angeordneten Reihen 175 angeordnet. In jeder Reihe 175 sind die Abdeckabschnitte 125 in y-Richtung beabstandet zueinander angeordnet. Dabei erstreckt sich zwischen den Abdeckabschnitten 125 der Anlageabschnitt 130. Vorzugsweise ist eine erste Ausrichtung der zweiten Durchgangsöffnung 170 an jedem Abdeckabschnitt 125 identisch.

Die stoffschlüssige Verbindung 145 ist in der Ausführungsform durch mehrere gekreuzt ausgebildete Schweißnähte 180, 185 ausgebildet. Jede der Schweißnähte 180, 185 ist beispielhaft geradlinig und durchgehend ausgebildet. Jeweils zwei parallel verlaufende erste Schweißnähte 180 kreuzen jeweils zwei parallel verlaufende zweite Schweißnähte 185 und bilden dabei eine Raute 190 aus, wobei durch die Raute 190 der Abdeckabschnitt 125 umfangsseitig eingeschlossen ist. Jede der Schweißnähte 180, 185 ist dabei so ausgeführt, dass ein Einbrand der Schweißnaht 180, 185 sich bis in die erste Verteilerplatte 85 erstreckt. Die Schweißnaht 180, 185 ist im Wesentlichen unterbrechungsfrei geführt, sodass umfangsseitig die Kammer 165 fluiddicht durch die stoffschlüssige Verbindung 145 am Anlageabschnitt 130 abgedichtet ist.

Im Folgenden wird die Funktionsweise des Verteilerbodens 20 anhand der FIGN 1 bis 4 erläutert. Wie bereits im Rahmen von FIG 1 erläutert wird das Reaktionsgas 60 über den Verteilerboden 20 in den Reaktorraum 30 geführt.

Dabei durchströmt das Reaktionsgas 60 die ersten Durchgangsöffnungen 100 im Wesentlichen parallel zu der Geraden 115(vgl. FIGN 3 und 4) in einer ersten Richtung. Aufgrund der geringen ersten Querschnittsfläche weist das Reaktionsgas 60 in der ersten Durchgangsöffnung 100 eine relativ hohe erste Geschwindigkeit v₁ auf.

Das durch eine erste Durchgangsöffnung 100 strömende Reaktionsgas 60 tritt in die jeweils zugeordnete Kammer 165 ein. Aufgrund der großvolumigen Ausgestaltung der Kammer 165 verlangsamt sich das Reaktionsgas 60 drastisch und strömt mit einer zweiten Geschwindigkeit v₂ in der Kammer 165. Die zweite Geschwindigkeit v₂ ist deutlich geringer als die erste Geschwindigkeit v₁. Ferner lenkt der Abdeckabschnitt 125 das Reaktionsgas 60 im Wesentlichen um 90° zu der Geraden 115 in eine zweite Richtung ab, sodass das Reaktionsgas 60 in der Kammer 165 im Wesentlichen in x- und/oder y-Richtung strömt (vgl. FIG 3).

Das Reaktionsgas 60 tritt an der zweiten Durchgangsöffnung 170 aus der Kammer 165 aus. Dabei durchströmt das Reaktionsgas 60 die zweite Durchgangsöffnung 170 mit einer dritten Geschwindigkeit v₃, die deutlich geringer als die erste Geschwindigkeit v₁ ist. Die dritte Geschwindigkeit v₃ kann größer als die zweite Geschwindigkeit v₂ in der Kammer 165 sein.

Das Reaktionsgas 60 wird aufgrund der Druckdifferenz zwischen dem Verteilerraum 25 und der Reaktionsgasabführung 50 nach Durchströmung der zweiten Durchgangsöffnung 170 von der zweiten Verteilerplatte 90 im Wesentlichen in z-Richtung umgelenkt und bildet zusammen mit dem Feinerz 55 oberhalb der zweiten Verteilerplatte 90 das Fließbett 65 aus.

Diese Führung des Reaktionsgases 60 hat den Vorteil, dass lokale Geschwindigkeitsüberhöhungen des Reaktionsgases 60 durch das flächige, über das Winkelsegment der zweiten Durchgangsöffnung 170 mit niedriger dritter Geschwindigkeit v₃ ausströmende Reaktionsgas 60 vermieden werden. Dadurch können lokale Gaskanäle in dem Fließbett 65 vermieden werden und eine möglichst gleichmäßige Verteilung des Reaktionsgases über die gesamte Querschnittsfläche des Fließbettreaktors erzielt werden. Ferner kann eine Druckpulsation des Reaktionsgases 60 in der ersten Durchgangsöffnung 100 durch die großvolumige Ausgestaltung der Kammer 165 gedämpft werden. Dadurch wird ein besonders stabiles Fließbett 65 mit dem Feinerz 55 erzeugt.

Durch die umfangsseitige Abdichtung der Kammer 165 durch die Schweißnähte 180, 185 wird ein Übertritt des Reaktionsgases 60 von der Kammer 165 zu einer anderen Kammer 165 verhindert. Dadurch wird jeweils ein zuverlässiger und gleichmäßiger Volumenstrom des Reaktionsgases 60 durch alle Kammern 165 des Verteilerbodens 20 sichergestellt. Dies beruhigt das Fließbett 65 im Reaktorraum 30 weiter und verhindert lokale Defluidisierungen.

Wird der Fließbettreaktor 10 abgestellt oder fällt die Gasversorgung 60 aus, bricht das Fließbett 65 zusammen. Infolgedessen bildet sich eine Schicht 230 aus Feinerz 55 und/oder des Reaktionsprodukts 75 auf der zweiten Oberseite 140 aus (die Schicht 230 ist strichliert in FIG 2 angedeutet). Zwar kann über die zweite Durchgangsöffnung 170 ein geringer Teil von dem Feinerz 55 und/oder dem Reaktionsprodukt 75 in die Kammer 165 eindringen und einen Schüttkegel in jeder Kammer 165 ausbilden, jedoch ist durch die Kammerlänge l die zweite Durchgangsöffnung 170 so weit von der ersten Durchgangsöffnung 100 in x- und/oder y-Richtung beabstandet angeordnet, dass das Feinerz 55 und/oder das Reaktionsprodukt 75 nicht die erste Durchgangsöffnung 100 erreicht.

Bei Wiederinbetriebnahme kann das in die Kammer 165 eingedrungene Feinerz 55 und/oder das Reaktionsprodukt 75 mittels des Reaktionsgases 60 aus der Kammer 165 ausgeblasen werden, da die fluidische Verbindung der Kammer 165 über die erste Durchgangsöffnung 100 zu dem Verteilerraum 25 sichergestellt ist.

Um den Verteilerboden 20 herzustellen, wird in einem ersten Verfahrensschritt ein erster plattenförmiger Rohling bereitgestellt. Der erste plattenförmige Rohling wird zugeschnitten und die ersten Durchgangsöffnungen 100 zur Ausbildung der ersten Anordnung 95 werden in den ersten Rohling eingebracht. Dies kann beispielsweise durch ein Laserschneiden oder ein Bohren der ersten Durchgangsöffnungen 100 in den ersten Rohling erfolgen.

In einem zweiten Verfahrensschritt wird ein plattenförmiges Blechmaterial bereitgestellt. In das Blechmaterial wird die zweite Anordnung 120 aus Abdeckabschnitten 125 in das Blechmaterial eingeprägt und die zweiten Durchgangsöffnungen 170 werden in das Blechmaterial geschnitten. Dies kann beispielsweise in einem Stanz-Biege-Schritt erfolgen, der vorzugsweise in einem einzigen Bearbeitungsschritt durchgeführt wird, sodass die Abdeckabschnitte 125 im Wesentlichen zeitgleich geprägt werden. Auch kann nur ein Teil der Vielzahl von Abdeckabschnitten 125 in dem Stanz-Biege-Schritt zeitgleich geprägt werden. Im Anlageabschnitt bleibt das Blechmaterial im Wesentlichen unverformt, sodass die plattenförmige Ausgestaltung des Anlageabschnitts 130 erhalten bleibt. Ferner werden die zweiten Durchgangsöffnungen zeitgleich geschnitten. Das Schneiden der Durchgangsöffnungen erfolgt vorzugsweise zeitgleich mit dem Prägen der Abdeckabschnitte 125.

In einem dritten Verfahrensschritt wird die zweite Verteilerplatte 90 mit der zweiten Unterseite 135 auf der ersten Oberseite 110 derart positioniert, dass die ersten Durchgangsöffnungen 100 nicht durch den Anlageabschnitt 130 verdeckt werden und die ersten Durchgangsöffnungen 100 gegenüberliegend zu dem Abdeckabschnitt 125 in z-Richtung angeordnet sind. Dadurch wird jeweils eine erste Durchgangsöffnung 100 durch einen zugeordneten Abdeckabschnitt 125 abgedeckt und die Kammer 165 ausgebildet. Durch die einstückige und materialeinheitliche Ausgestaltung der zweiten Verteilerplatte 90 werden alle Abdeckabschnitte 125 im dritten Verfahrensschritt zu der ersten Anordnung von ersten Durchgangsöffnungen 100 ausgerichtet, sodass der Zeitbedarf zur Ausrichtung der Abdeckabschnitte 125 stark reduziert ist.

In einem vierten Verfahrensschritt wird die stoffschlüssige Verbindung 145 zur Verbindung des Anlageabschnitts 130 mit der ersten Verteilerplatte 85 ausgebildet. Dabei kann im Rahmen beispielsweise eines Laserschweißverfahrens mittels der Schweißnähte 180, 185 die erste Verteilerplatte 85 mit der zweiten Verteilerplatte 90 verschweißt werden. Ferner wird dadurch die Kammer 165 in Umfangsrichtung fluiddicht abgedichtet. Die Schweißnähte 180, 185 sind dabei vorzugsweise durchlaufend ausgebildet. Dadurch kann der Verteilerboden 20 besonders einfach in wenigen Verfahrensschritten hergestellt werden.

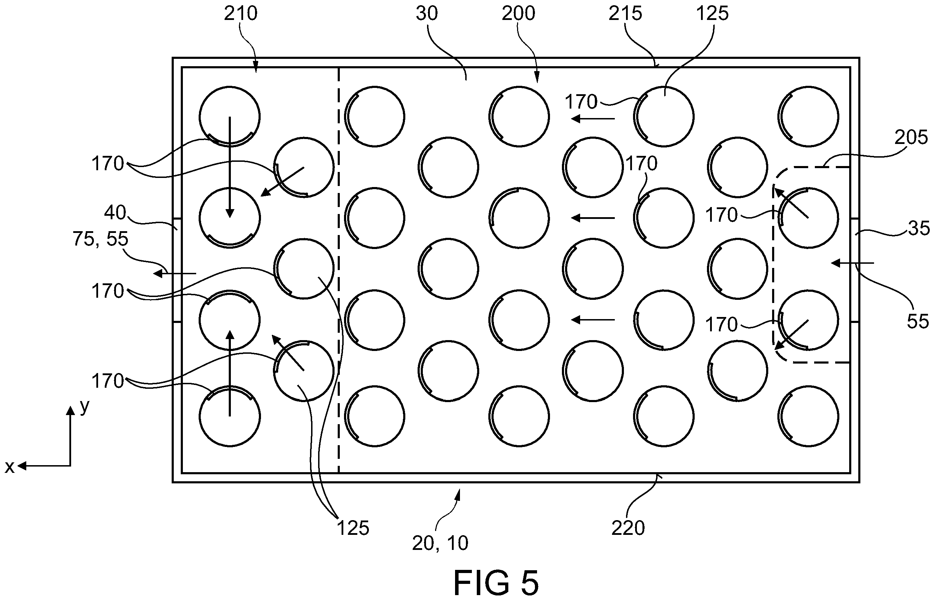

FIG 5 zeigt eine schematische Darstellung einer Draufsicht auf einen Fließbettreaktor 10 gemäß einer zweiten Ausführungsform.

Der Fließbettreaktor 10 in FIG 5 ist im Wesentlichen identisch zu dem in den FIGN 1 bis 4 erläuterten Fließbettreaktor 10 ausgebildet. Im Folgenden wird ausschließlich auf die Unterschiede des in FIG 5 gezeigten Fließbettreaktors 10 gegenüber dem in den FIGN 1 bis 4 gezeigten Fließbettreaktor 10 gemäß der ersten Ausführungsform eingegangen.

Der Verteilerboden 20 weist einen ersten Bereich 200 und wenigstens einen zweiten Bereich 205 auf. Zusätzlich kann der Verteilerboden 20 einen dritten Bereich 210 aufweisen. Der Verteilerboden 20 erstreckt sich in seiner Haupterstreckungsrichtung im Wesentlichen in x-Richtung. Dabei entspricht beispielhaft die x-Richtung einer Förderrichtung des Feinerzes 55 zwischen der Einfüllöffnung 35 und der Entnahmeöffnung 40. Seitlich in y-Richtung wird der Verteilerboden 20 durch einen Seitenrand 215, 220 begrenzt.

Der erste Bereich 200 ist in x-Richtung zwischen der Einfüllöffnung 35 und der Entnahmeöffnung 40 angeordnet. Die zweiten Durchgangsöffnungen 170 sind als teilringförmige Segmente schematisch in FIG 5 angedeutet, um die Anordnung der zweiten Durchgangsöffnung 170 zu zeigen. Im Idealfall ist jedoch in der Draufsicht die zweite Durchgangsöffnung 170 nicht sichtbar.

Im ersten Bereich 200 weisen die zweiten Durchgangsöffnungen 170 die identische erste Ausrichtung auf. Die erste Ausrichtung der zweiten Durchgangsöffnungen 170 ist vorzugsweise so gewählt, dass die zweite Durchgangsöffnung 170 auf einer zur Einfüllöffnung 35 abgewandten Seite des Abdeckabschnitts 125 angeordnet ist. Ferner sind die zweiten Durchgangsöffnungen 170 im ersten Bereich 200 so ausgerichtet, dass ein Volumenstrom des Reaktionsgases 60 im Wesentlichen in Richtung der Entnahmeöffnung 40 parallel zur x-Achse ausgerichtet ist.

Im zweiten Bereich 205, der in x-Richtung zwischen dem ersten Bereich 200 und der Einfüllöffnung 35 angeordnet ist, weisen die zweiten Durchgangsöffnungen 170 eine zweite Ausrichtung auf. Die zweite Ausrichtung ist beispielsweise unterschiedlich zu der ersten Ausrichtung der zweiten Durchgangsöffnungen 170 im ersten Bereich 200. Die zweiten Durchgangsöffnungen 170 im zweiten Bereich 205 können beispielsweise unterschiedlich zueinander ausgerichtet sein. Beispielsweise ist die zweite Ausrichtung der zweiten Durchgangsöffnung 170 im zweiten Bereich 205 so gewählt, dass die zweite Durchgangsöffnung 170 auf einer zur Einfüllöffnung 35 abgewandten Seite des Abdeckabschnitts 125 angeordnet ist. Ferner sind die zweiten Durchgangsöffnungen 170 im zweiten Bereich 205 voneinander weg zeigend in Richtung jeweils des nächstliegenden Seitenrands 215, 220 ausgerichtet.

Im dritten Bereich 210 weisen die zweiten Durchgangsöffnungen 170 eine dritte Ausrichtung auf. Die dritte Ausrichtung ist beispielhaft unterschiedlich zu der ersten Ausrichtung und/oder zu der zweiten Ausrichtung. Dabei sind im dritten Bereich 210 die zweiten Durchgangsöffnungen 170 auf einer zur Entnahmeöffnung 40 zugewandten Seite der Abdeckabschnitte 125 angeordnet.

Im dritten Bereich 210 sind die zweiten Durchgangsöffnungen 170 auf einer der Einfüllöffnung 35 abgewandten Seite, aber ebenso auf jeweils einer dem nächstliegenden Seitenrand 215, 220 abgewandten Seite des Abdeckabschnitts 125 angeordnet. Die zweiten Durchgangsöffnungen 170 sind dabei auf der zur Entnahmeöffnung 40 zugewandten Seite der Abdeckabschnitte 125 angeordnet.

Im Betrieb des in FIG 5 gezeigten Fließbettreaktors 10 wird über die Einfüllöffnung 35 das Feinerz 55 in den Reaktorraum 30 gefördert. Dabei wird das Feinerz 55 zuerst in den zweiten Bereich 205 gefördert. Die zum Seitenrand 215, 220 hin und zur Entnahmeöffnung 40 hin gerichtete zweite Ausrichtung der zweiten Durchgangsöffnungen 170 bewirkt, dass im Fließbett 65 das Feinerz 55 von der Entnahmeöffnung 40 in y-Richtung durch das im zweiten Bereich 205 ausströmende Reaktionsgas 60 wegtransportiert wird und über eine gesamte Breite des Verteilerbodens 20 verteilt wird. Dadurch kann ein besonders großer Massenstrom von Feinerz 55 in den Reaktorraum 30 gefördert werden. Das Reaktionsgas 60 strömt dabei schräg zur x- und y-Achse geneigt aus der zweiten Durchgangsöffnung 170 aus und verteilt in y-Richtung das Feinerz 55 über die gesamte Breite des Verteilerboden 20 und fördert das Feinerz 55 in den ersten Bereich 200.

Verteilt über die gesamte Breite wird das Feinerz 55 vor allem im ersten Bereich 200 behandelt und mit dem Reaktionsgas 60 zu dem Reaktionsprodukt 75 verarbeitet. Dabei werden das Feinerz 55 und das Reaktionsprodukt 75 in x-Richtung von der Einfüllöffnung 35 in Richtung der Entnahmeöffnung 40 weiter transportiert. Dabei strömt im Wesentlichen das Reaktionsgas 60 in x-Richtung aus der zweiten Durchgangsöffnung 170 im ersten Bereich 200 aus und transportiert das Feinerz 55 bzw. das Reaktionsprodukt 75 in Richtung der Entnahmeöffnung 40.

Am dritten Bereich 210 angelangt wird das Feinerz 55 bzw. das Reaktionsprodukt 75 durch die dritte Ausrichtung der zweiten Durchgangsöffnungen 170 vom Seitenrand 215, 220 in Richtung der Entnahmeöffnung 40 nach innen hin konzentriert und gefördert. Dadurch kann das Reaktionsprodukt 75 besonders gut über die Entnahmeöffnung 40 aus dem Reaktorraum 30 entnommen werden, ohne dass zusätzliche mechanische Hilfsmittel notwendig sind, um das Reaktionsprodukt 75 in Richtung der Entnahmeöffnung zu fördern.

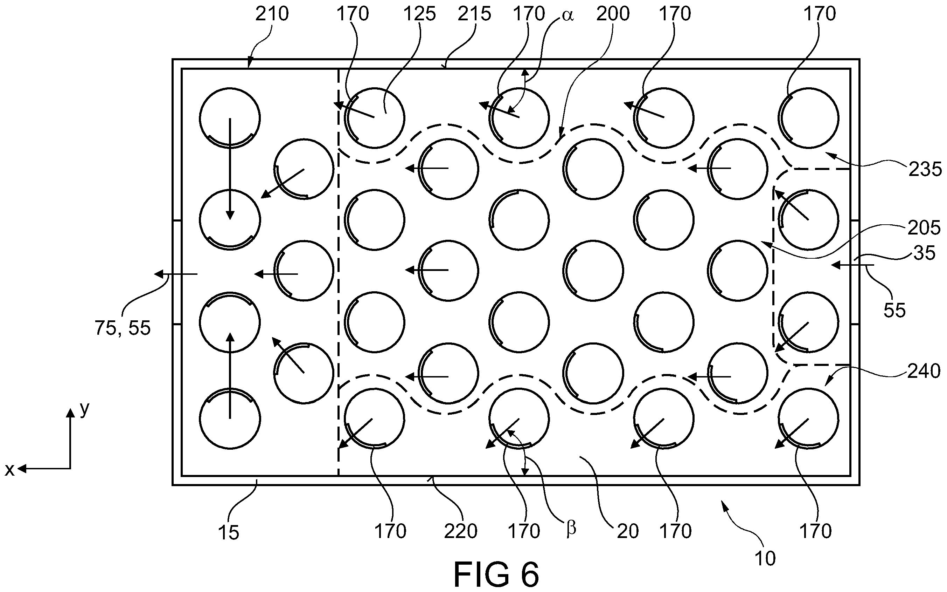

FIG 6 zeigt eine schematische Darstellung einer Draufsicht auf einen Fließbettreaktor 10 gemäß einer dritten Ausführungsform.

Der Fließbettreaktor 10 in FIG 6 ist im Wesentlichen identisch zu dem in FIG 5 erläuterten Fließbettreaktor 10 ausgebildet. Im Folgenden wird ausschließlich auf die Unterschiede des in FIG 6 gezeigten Fließbettreaktors 10 gegenüber dem in den FIG 5 gezeigten Fließbettreaktor 10 gemäß der zweiten Ausführungsform eingegangen.

Zusätzlich weist der Verteilerboden 20 in FIG 6 einen ersten Randbereich 235 und vorzugsweise einen zweiten Randbereich 240 auf. In der Ausführungsform sind beispielhaft der erste Randbereich 235 und der zweite Randbereich 240 vorgesehen. Auf zumindest einen der beiden Randbereiche 235, 240 kann auch verzichtet werden. In x-Richtung sind beispielhaft der erste Randbereich 235 und der zweite Randbereich 240 zwischen der Einfüllöffnung 35 und dem dritten Bereich 210 angeordnet. In y-Richtung sind der erste Randbereich 235 und der zweite Randbereich 240 versetzt zu der Einfüllöffnung 35 angeordnet. Dabei schließt sich der erste Randbereich 235 in Querrichtung an den ersten Seitenrand 215 an. Der erste Randbereich 235 grenzt innenseitig an den ersten Bereich 200 und vorzugsweise an den zweiten Bereich 205 an. Ferner schließt sich der zweite Randbereich 240 in Querrichtung an den zweiten Seitenrand 220 an und ist in Querrichtung gegenüberliegend zu dem ersten Randbereich 235 angeordnet. Der zweite Randbereich 240 grenzt innenseitig an den ersten Bereich 200 und vorzugsweise an den zweiten Bereich 205 an.

Im ersten Randbereich 235 ist die zweite Durchgangsöffnung 170 schräg nach außen in Richtung dem ersten Seitenrand 215 gerichtet und vom ersten Bereich 200 weg gerichtet. Ferner ist die zweite Durchgangsöffnung 170 in Längsrichtung auf der zum dritten Bereich 210 zugewandten Seite des Abdeckabschnitts 125 angeordnet. Die Ausrichtung der zweiten Durchgangsöffnung 170 ist beispielsweise so gewählt, dass das Reaktionsgas 60 in einem ersten spitzen Winkel α in Richtung dem ersten Seitenrand 215 und in x-Richtung in Richtung dem dritten Bereich 210 strömt. Der Winkel α kann 30° bis 60° betragen.

Im zweiten Randbereich 240 ist die zweite Durchgangsöffnung 170 schräg nach außen in Richtung dem zweiten Seitenrand 220 gerichtet und somit vom ersten Bereich 200 weg gerichtet. Ferner ist die zweite Durchgangsöffnung 170 in Längsrichtung auf der zum dritten Bereich 210 und dem zweiten Seitenrand 220 zugewandten Seite des Abdeckabschnitts 125 angeordnet. Die Ausrichtung der zweiten Durchgangsöffnung 170 ist beispielsweise so gewählt, dass das Reaktionsgas 60 in einem zweiten spitzen Winkel β in Richtung dem zweiten Seitenrand 220 und in x-Richtung in Richtung des dritten Bereichs 210 strömt. Der zweite Winkel β kann identisch zu dem ersten Winkel α sein und/oder 30° bis 60° betragen.

Diese Ausgestaltung hat den Vorteil, den Randbereich des Fließbettes 65 besser zu fluidisieren und damit negative Randeffekte auf das Fluidisierungsverhalten des Feinerzes 55 und/oder Reaktionsproduktes 75 zu minimieren.

### Bezugszeichenliste

- 10: Fließbettreaktor
- 15: Reaktor
- 20: Verteilerboden
- 25: Verteilerraum
- 30: Reaktorraum
- 35: Einfüllöffnung
- 40: Entnahmeöffnung
- 45: Reaktionsgaszuführung
- 50: Reaktionsgasabführung
- 55: Feinerz
- 60: Reaktionsgas
- 65: Fließbett
- 70: Eisenpartikelträger
- 75: Reaktionsprodukt
- 80: verbrauchtes Reaktionsgas
- 85: erste Verteilerplatte
- 90: zweite Verteilerplatte
- 95: erste Anordnung
- 100: erste Durchgangsöffnung
- 105: erste Unterseite
- 110: erste Oberseite
- 115: Gerade
- 120: zweite Anordnung
- 125: Abdeckabschnitt
- 130: Anlageabschnitt
- 135: zweite Unterseite
- 140: zweite Oberseite
- 145: stoffschlüssige Verbindung
- 150: Schweißverbindung
- 155: erster Teilbereich
- 160: zweiter Teilbereich
- 165: Kammer
- 170: zweite Durchgangsöffnung
- 171: freies Ende
- 172: Schnittfläche
- 175: Reihe
- 180: erste Schweißnaht
- 185: zweite Schweißnaht
- 190: Raute
- 200: erster Bereich
- 205: zweiter Bereich
- 210: dritter Bereich
- 215: erster Seitenrand
- 220: zweiter Seitenrand
- 230: Schicht
- 235: erster Randbereich
- 240: zweiter Randbereich

## Patentansprüche

1. Fließbettreaktor (10) zur Behandlung von oxidischem Feinerz (55), insbesondere Eisenerz,
- wobei der Fließbettreaktor (10) einen Verteilerboden (20), einen Verteilerraum (25) und einen Reaktor (15) mit einem Reaktorraum (30) aufweist,
- wobei der Verteilerboden (20) den Reaktorraum (30) räumlich vom Verteilerraum (25) abtrennt,
- wobei der Verteilerboden (20) eine erste Verteilerplatte (85) und eine auf der ersten Verteilerplatte (85) angeordnete zweite Verteilerplatte (90) aufweist,
- wobei die erste Verteilerplatte (85) auf einer zum Verteilerraum (25) zugewandten Seite und die zweite Verteilerplatte (90) auf einer dem Reaktorraum (30) zugewandten Seite angeordnet sind,
- wobei die erste Verteilerplatte (85) eine erste Anordnung (95) aus sich vom Verteilerraum (25) in einer ersten Richtung (z) zum Reaktorraum (30) erstreckenden ersten Durchgangsöffnungen (100) aufweist,
- wobei die zweite Verteilerplatte (90) einen plattenförmig und parallel zu der ersten Verteilerplatte (85) verlaufenden Anlageabschnitt (130) aufweist,
- wobei die zweite Verteilerplatte (90) ferner eine zweite Anordnung (120) aus einer Vielzahl von Abdeckabschnitten (125) aufweist,
- wobei der Anlageabschnitt (130) beabstandet zu der ersten Anordnung (95) der ersten Durchgangsöffnungen (100) an der ersten Verteilerplatte (85) anliegt,
- wobei jeweils ein Abdeckabschnitt (125) der zweiten Anordnung (120) beabstandet in der ersten Richtung (z) zu einer zugeordneten ersten Durchgangsöffnung (100) angeordnet ist und die zugeordnete erste Durchgangsöffnung (100) zum Reaktorraum (30) abdeckt,
- wobei die zweite Verteilerplatte (90) an jedem der Abdeckabschnitte (125) eine in einer zweiten Richtung (x, y) geneigt zu der Geraden (115) versetzt zu der ersten Durchgangsöffnung (100) angeordnete zweite Durchgangsöffnung (170) aufweist,
- wobei aus dem Verteilerraum (25) über die ersten Durchgangsöffnungen (100) und die zweiten Durchgangsöffnungen (170) ein Reaktionsgas (60) zur Behandlung des Feinerzes (55) und zur Ausbildung eines Fließbetts (65) aus Feinerz (55) und Reaktionsgas (60) in den Reaktorraum (30) einleitbar ist.

2. Fließbettreaktor (10) nach Anspruch 1,
- wobei der Anlageabschnitt (130) die versetzt zueinander angeordneten Abdeckabschnitte (125) der zweiten Anordnung (120) miteinander mechanisch verbindet,
- wobei der Anlageabschnitt (130) mechanisch mit der ersten Verteilerplatte (85) verbunden ist,
- wobei vorzugsweise die zweite Verteilerplatte (90) einstückig und materialeinheitlich ausgebildet ist,
- wobei vorzugsweise die zweite Anordnung (120) aus Abdeckabschnitten (125) in die zweite Verteilerplatte (90) eingeprägt ist.

3. Fließbettreaktor (10) nach einem der vorhergehenden Ansprüche,
- wobei die erste Verteilerplatte (85) und der Abdeckabschnitt (125) jeweils eine Kammer (165) begrenzen,
- wobei sich die Kammer (165) zwischen der ersten Durchgangsöffnung (100) und der zweiten Durchgangsöffnung (170) parallel zu der ersten Verteilerplatte (85) in der zweiten Richtung (x, y) erstreckt.

4. Fließbettreaktor (10) nach Anspruch 3,
- wobei die Kammer (165) eine Kammerquerschnittsfläche, die erste Durchgangsöffnung (100) eine erste Querschnittsfläche und die zweite Durchgangsöffnung (170) eine zweite Querschnittsfläche aufweisen,
- wobei die zweite Querschnittsfläche größer als die erste Querschnittsfläche ist,
- wobei die Kammerquerschnittsfläche größer als die zweite Querschnittsfläche ist.

5. Fließbettreaktor (10) nach Anspruch 3 oder 4,
- wobei die Kammer (165) in der zweiten Richtung (x, y) zwischen der ersten Durchgangsöffnung (100) und der zweiten Durchgangsöffnung (170) eine Kammerlänge (l) aufweist,
- wobei die zweite Durchgangsöffnung (170) in der ersten Richtung (z) eine Öffnungshöhe (h) aufweist,
- wobei die Öffnungshöhe (h) der zweiten Durchgangsöffnung (170) geringer ist als die Kammerlänge (l) der Kammer (165),
- wobei vorzugsweise ein Verhältnis der der Kammerlänge (l) zu der Öffnungshöhe (h) von 1 bis einschließlich 20 beträgt.

6. Fließbettreaktor (10) nach einem der vorhergehenden Ansprüche,
- wobei die zweite Verteilerplatte (90) eine erste Oberseite (110) der ersten Verteilerplatte (85) im Wesentlichen in die erste Richtung (z) geneigt zu der ersten Oberseite (110) zumindest im Bereich der ersten Anordnung (95), vorzugsweise im Wesentlichen vollständig, überdeckt.

7. Fließbettreaktor (10) nach einem der vorhergehenden Ansprüche,
- wobei der Verteilerboden (20) einen ersten Bereich (200) und wenigstens einen zweiten Bereich (205) aufweist,
- wobei in dem ersten Bereich (200) die zweiten Durchgangsöffnungen (170) der zweiten Anordnung (120) jeweils eine identische erste Ausrichtung aufweisen,
- wobei in dem zweiten Bereich (205) die zweiten Durchgangsöffnungen (170) der zweiten Anordnung (120) jeweils eine zur ersten Ausrichtung unterschiedliche zweite Ausrichtung aufweisen.

8. Fließbettreaktor (10) nach Anspruch 7,
- aufweisend eine in den Reaktorraum (30) mündende Einfüllöffnung (35) und eine in den Reaktorraum (30) mündende Entnahmeöffnung (40),
- wobei die Einfüllöffnung (35) gegenüberliegend zu der Entnahmeöffnung (40) angeordnet ist und über die Einfüllöffnung (35) das Feinerz (55) in den Reaktorraum (30) förderbar ist,
- wobei über die Entnahmeöffnung (40) ein Reaktionsprodukt (75) aus einer Reaktion des Feinerzes (55) mit dem Reaktionsgas (60) aus dem Reaktorraum (30) förderbar ist,
- wobei der erste Bereich (200) zwischen der Einfüllöffnung (35) und der Entnahmeöffnung (40) angeordnet ist,
- wobei im ersten Bereich (200) die zweite Durchgangsöffnung (170) jeweils auf einer der Entnahmeöffnung (40) zugewandten Seite des Abdeckabschnitts (125) angeordnet ist.

9. Fließbettreaktor (10) nach Anspruch 7 oder 8,
- wobei der zweite Bereich (205) zwischen der Einfüllöffnung (35) und dem ersten Bereich (200) angeordnet ist,
- wobei die zweite Durchgangsöffnung (170) im zweiten Bereich (205) auf einer der Einfüllöffnung (35) abgewandten Seite und auf einer einem Seitenrand (215, 220) des Verteilerbodens (20) zugewandten Seite derart angeordnet ist, dass das Feinerz (55) von der Einfüllöffnung (35) in Richtung des Seitenrands (215, 220) mittels des ausströmenden Reaktionsgases (60) verteilbar ist.

10. Fließbettreaktor (10) nach einem der Ansprüche 7 bis 9,
- wobei der Verteilerboden (20) einen dritten Bereich (210) aufweist,
- wobei der dritte Bereich (210) zwischen dem ersten Bereich (200) und der Entnahmeöffnung (40) angeordnet ist,
- wobei in dem dritten Bereich (210) die zweiten Durchgangsöffnungen (170) jeweils eine zur ersten Ausrichtung unterschiedliche dritte Ausrichtung aufweisen,
- wobei die zweite Durchgangsöffnung (170) im dritten Bereich (210) jeweils auf einer der Entnahmeöffnung (40) zugewandten Seite und auf einer einem Seitenrand (215, 220) des Verteilerbodens (20) abgewandten Seite des Abdeckabschnitts (125) derart angeordnet ist, dass das Feinerz (55) und/oder ein Reaktionsprodukt (75) aus einer Reaktion des Feinerzes (55) mit dem Reaktionsgas (60) mittels des ausströmenden Reaktionsgases (60) von dem Seitenrand (215, 220) in Richtung der Entnahmeöffnung (40) förderbar ist.

11. Fließbettreaktor (10) nach einem der Ansprüche 7 bis 10,
- wobei der Verteilerboden (20) wenigstens einen Randbereich (235, 240) aufweist,
- wobei der Randbereich (235, 240) zwischen dem ersten Bereich (200) und der Entnahmeöffnung (40) und seitlich angrenzend an einen Seitenrand (215, 220) des Verteilerbodens (20) angeordnet ist,
- wobei die zweite Durchgangsöffnung (170) im Randbereich (235, 240) jeweils auf einer der Entnahmeöffnung (40) zugewandten Seite und auf einer dem Seitenrand (215, 220) des Verteilerbodens (20) zugewandten Seite des Abdeckabschnitts (125) derart angeordnet ist, dass das Feinerz (55) und/oder ein Reaktionsprodukt (75) aus einer Reaktion des Feinerzes (55) mit dem Reaktionsgas (60) mittels des ausströmenden Reaktionsgases (60) in Richtung der Entnahmeöffnung (40) förderbar ist.

12. Fließbettreaktor (10) nach einem der vorhergehenden Ansprüche,
- wobei die zweite Durchgangsöffnung (170) schlitzförmig ausgebildet ist,
- wobei die zweite Durchgangsöffnung (170) in der ersten Richtung (z) im Wesentlichen eine konstante Öffnungshöhe (h) aufweist.

13. Fließbettreaktor (10) nach einem der vorhergehenden Ansprüche,
- wobei umfangsseitig bezogen auf die Gerade (115) jeweils um eine erste Durchgangsöffnung (100) die erste Verteilerplatte (85) und der Anlageabschnitt (130) abgedichtet sind,
- wobei vorzugsweise umfangsseitig um die erste Durchgangsöffnung (100) jeweils der Anlageabschnitt (130) stoffschlüssig mit der ersten Verteilerplatte (85) verbunden, vorzugsweise verschweißt, ist.

14. Fließbettreaktor (10) nach einem der vorhergehenden Ansprüche,
- wobei der Abdeckabschnitt (125) einen ersten Teilbereich (155) und einen zweiten Teilbereich (160) aufweist,
- wobei der erste Teilbereich (155) parallel zu der ersten Verteilerplatte (85) verlaufend angeordnet ist und die erste Durchgangsöffnung (100) überdeckt,
- wobei der erste Teilbereich (155) die erste Durchgangsöffnung (100) zumindest abschnittsweise überdeckt,
- wobei der zweite Teilbereich (160) schräg geneigt zu dem ersten Teilbereich (155) angeordnet ist und den ersten Teilbereich (155) mit dem Anlageabschnitt (130) verbindet.

15. Verfahren zur Herstellung eines Fließbettreaktors (10) nach einem der vorhergehenden Ansprüche,
- wobei die erste Verteilerplatte (85) mit der ersten Anordnung (95) von ersten Durchgangsöffnungen (100) bereitgestellt wird,
- wobei in ein plattenförmiges Blechmaterial die zweite Anordnung (120) mit der Vielzahl der Abdeckabschnitte (125) eingeprägt und die zweiten Durchgangsöffnungen (170) in das Blechmaterial, vorzugsweise in einem Bearbeitungsschritt geschnitten, vorzugsweise gestanzt, werden,
- wobei die zweite Verteilerplatte (90) derart an der ersten Verteilerplatte (85) angeordnet wird, dass jeweils die erste Durchgangsöffnung (100) durch einen zugeordneten Abdeckabschnitt (125) abgedeckt wird,
- wobei der Anlageabschnitt (130) mit der ersten Verteilerplatte (85) mechanisch verbunden wird.

## Claims

1. Fluidized bed reactor (10) for treating oxidic ore fines (55), in particular iron ore,
- wherein the fluidized bed reactor (10) has a distributor base (20), a distributor chamber (25) and a reactor (15) having a reactor chamber (30),
- wherein the distributor base (20) separates the reactor chamber (30) spatially from the distributor chamber (25),
- wherein the distributor base (20) has a first distributor plate (85) and a second distributor plate (90) which is arranged on the first distributor plate (85),
- wherein the first distributor plate (85) is arranged at a side facing the distributor chamber (25) and the second distributor plate (90) is arranged at a side facing the reactor chamber (30),
- wherein the first distributor plate (85) has a first arrangement (95) comprising first through-openings (100) which extend from the distributor chamber (25) in a first direction (z) toward the reactor chamber (30),
- wherein the second distributor plate (90) has an abutment portion (130) which extends in a plate-like manner and parallel with the first distributor plate (85),
- wherein the second distributor plate (90) further has a second arrangement (120) comprising a large number of cover portions (125),
- wherein the abutment portion (130) abuts with spacing from the first arrangement (95) of the first through-openings (100) against the first distributor plate (85),
- wherein a cover portion (125) of the second arrangement (120) is in each case arranged with spacing in the first direction (z) with respect to an associated first through-opening (100) and covers the associated first through-opening (100) to the reactor chamber (30),
- wherein the second distributor plate (90) has on each of the cover portions (125) a second through-opening (170) which is arranged in a manner inclined in a second direction (x, y) with respect to the straight line (115) so as to be offset with respect to the first through-opening (100),
- wherein from the distributor chamber (25) via the first through-openings (100) and the second through-openings (170), a reaction gas (60) for treating the ore fines (55) and for forming a fluidized bed (65) comprising ore fines (55) and reaction gas (60) can be introduced into the reactor chamber (30).

2. Fluidized bed reactor (10) according to Claim 1,
- wherein the abutment portion (130) mechanically connects to each other the cover portions (125), which are arranged offset relative to each other, of the second arrangement (120),
- wherein the abutment portion (130) is mechanically connected to the first distributor plate (85),
- wherein the second distributor plate (90) is preferably constructed integrally and in a materially uniform manner,
- wherein preferably the second arrangement (120) of cover portions (125) is pressed into the second distributor plate (90) .

3. Fluidized bed reactor (10) according to either of the preceding claims,
- wherein the first distributor plate (85) and the cover portion (125) delimit a chamber (165) in each case,
- wherein the chamber (165) extends between the first through-opening (100) and the second through-opening (170) parallel with the first distributor plate (85) in the second direction (x, y).

4. Fluidized bed reactor (10) according to Claim 3,
- wherein the chamber (165) has a chamber cross sectional surface-area, the first through-opening (100) has a first cross sectional surface-area and the second through-opening (170) has a second cross sectional surface-area,
- wherein the second cross sectional surface-area is greater than the first cross sectional surface-area,
- wherein the chamber cross sectional surface-area is greater than the second cross sectional surface-area.

5. Fluidized bed reactor (10) according to Claim 3 or 4,
- wherein the chamber (165) has a chamber length (1) in the second direction (x, y) between the first through-opening (100) and the second through-opening (170),
- wherein the second through-opening (170) has an opening height (h) in the first direction (z),
- wherein the opening height (h) of the second through-opening (170) is smaller than the chamber length (1) of the chamber (165),
- wherein a ratio of the chamber length (1) to the opening height (h) is preferably from 1 to 20 inclusive.

6. Fluidized bed reactor (10) according to one of the preceding claims,
- wherein the second distributor plate (90) covers a first upper side (110) of the first distributor plate (85) in a manner inclined substantially in the first direction (z) relative to the first upper side (110) at least in the region of the first arrangement (95), preferably substantially completely.

7. Fluidized bed reactor (10) according to one of the preceding claims,
- wherein the distributor base (20) has a first region (200) and at least a second region (205),
- wherein, in the first region (200), the second through-openings (170) of the second arrangement (120) each have an identical first orientation,
- wherein, in the second region (205), the second through-openings (170) of the second arrangement (120) each have a second orientation which is different from the first orientation.

8. Fluidized bed reactor (10) according to Claim 7,
- having a filling opening (35) which opens into the reactor chamber (30) and a removal opening (40) which opens into the reactor chamber (30),
- wherein the filling opening (35) is arranged opposite the removal opening (40) and via the filling opening (35) the ore fines (55) can be conveyed into the reactor chamber (30),
- wherein, via the removal opening (40), a reaction product (75) from a reaction of the ore fines (55) can be conveyed with the reaction gas (60) out of the reactor chamber (30),
- wherein the first region (200) is arranged between the filling opening (35) and the removal opening (40),
- wherein, in the first region (200), the second through-opening (170) is in each case arranged at a side, facing the removal opening (40), of the cover portion (125).

9. Fluidized bed reactor (10) according to Claim 7 or 8,
- wherein the second region (205) is arranged between the filling opening (35) and the first region (200),
- wherein the second through-opening (170) in the second region (205) is arranged at a side facing away from the filling opening (35) and at a side facing a side edge (215, 220) of the distributor base (20) in such a manner that the ore fines (55) from the filling opening (35) can be distributed in the direction of the side edge (215, 220) by means of the outgoing reaction gas (60).

10. Fluidized bed reactor (10) according to one of Claims 7 to 9,
- wherein the distributor base (20) has a third region (210),
- wherein the third region (210) is arranged between the first region (200) and the removal opening (40),
- wherein in the third region (210) the second through-openings (170) have in each case a third orientation which is different from the first orientation,
- wherein the second through-opening (170) in the third region (210) is arranged in each case at a side facing the removal opening (40) and at a side of the cover portion (125) facing away from a side edge (215, 220) of the distributor base (20) in such a manner that the ore fines (55) and/or a reaction product (75) from a reaction of the ore fines (55) with the reaction gas (60) can be conveyed from the side edge (215, 220) in the direction of the removal opening (40) by means of the outgoing reaction gas (60).

11. Fluidized bed reactor (10) according to one of Claims 7 to 10,
- wherein the distributor base (20) has at least one edge region (235, 240),
- wherein the edge region (235, 240) is arranged between the first region (200) and the removal opening (40) and laterally adjacent to a side edge (215, 220) of the distributor base (20),
- wherein the second through-opening (170) in the edge region (235, 240) is arranged in each case at a side facing the removal opening (40) and at a side of the cover portion (125) facing the side edge (215, 220) of the distributor base (20) in such a manner that the ore fines (55) and/or a reaction product (75) from a reaction of the ore fines (55) with the reaction gas (60) can be conveyed in the direction of the removal opening (40) by means of the outgoing reaction gas (60).

12. Fluidized bed reactor (10) according to one of the preceding claims,
- wherein the second through-opening (170) is constructed in a slot-like manner,
- wherein the second through-opening (170) substantially has a constant opening height (h) in the first direction (z).

13. Fluidized bed reactor (10) according to one of the preceding claims,
- wherein, at the circumference with respect to the straight line (115), the first distributor plate (85) and the abutment portion (130) are sealed in each case around a first through-opening (100),
- wherein preferably, at the circumference around the first through-opening (100), in each case the abutment portion (130) is connected to the first distributor plate (85) in a materially engaging manner, preferably welded.

14. Fluidized bed reactor (10) according to one of the preceding claims,
- wherein the cover portion (125) has a first part-region (155) and a second part-region (160),
- wherein the first part-region (155) is arranged so as to extend parallel with the first distributor plate (85) and covers the first through-opening (100),
- wherein the first part-region (155) covers the first through-opening (100) at least partially,
- wherein the second part-region (160) is arranged in a manner inclined obliquely with respect to the first part-region (155) and connects the first part-region (155) to the abutment portion (130) .

15. Method for producing a fluidized bed reactor (10) according to one of the preceding claims,
- wherein the first distributor plate (85) is provided with the first arrangement (95) of first through-openings (100),
- wherein the second arrangement (120) with the large number of cover portions (125) is pressed into a plate-like sheet metal material and the second through-openings (170) are cut in the sheet metal material, preferably in one processing step, preferably punched,
- wherein the second distributor plate (90) is arranged in such a manner on the first distributor plate (85) that the first through-opening (100) is covered by an associated cover portion (125) in each case,
- wherein the abutment portion (130) is mechanically connected to the first distributor plate (85).

## Revendications

1. Réacteur à lit fluidisé (10) pour le traitement de fines de minerai (55) à base d'oxydes, en particulier de minerai de fer,
- dans lequel le réacteur à lit fluidisé (10) présente un fond de distribution (20), une chambre de distribution (25) et un réacteur (15) comprenant une chambre de réacteur (30),
- dans lequel le fond de distribution (20) sépare de manière spatiale la chambre de réacteur (30) par rapport à la chambre de distribution (25),
- dans lequel le fond de distribution (20) présente une première plaque de distribution (85) et une seconde plaque de distribution (90) agencée sur la première plaque de distribution (85),
- dans lequel la première plaque de distribution (85) est agencée sur un côté tourné vers la chambre de distribution (25) et la seconde plaque de distribution (90) est agencée sur un côté tourné vers la chambre de réacteur (30),
- dans lequel la première plaque de distribution (85) présente un premier agencement (95) constitué de premières ouvertures de passage (100) s'étendant à partir de la chambre de distribution (25) dans une première direction (z) vers la chambre de réacteur (30),
- dans lequel la seconde plaque de distribution (90) présente une section d'appui (130) en forme de plaque et parallèle à la première plaque de distribution (85),
- dans lequel la seconde plaque de distribution (90) présente en outre un second agencement (120) constitué d'une pluralité de sections de recouvrement (125),
- dans lequel la section d'appui (130) repose sur la première plaque de distribution (85) à distance du premier agencement (95) des premières ouvertures de passage (100),
- dans lequel une section de recouvrement (125) du second agencement (120) est agencée à distance, dans la première direction (z), d'une première ouverture de passage (100) associée et recouvre la première ouverture de passage (100) associée menant à la chambre de réacteur (30),
- dans lequel la seconde plaque de distribution (90) présente au niveau de chacune des sections de recouvrement (125) une seconde ouverture de passage (170) agencée de manière décalée par rapport à la première ouverture de passage (100) et de manière inclinée par rapport à la droite (115) dans une seconde direction (x, y),
- dans lequel un gaz de réaction (60) peut être introduit dans la chambre de réacteur (30) à partir de la chambre de distribution (25) par l'intermédiaire des premières ouvertures de passage (100) et des secondes ouvertures de passage (170) afin de traiter les fines de minerai (55) et de former un lit fluidisé (65) constitué de fines de minerai (55) et de gaz de réaction (60).

2. Réacteur à lit fluidisé (10) selon la revendication 1,
- dans lequel la section d'appui (130) relie les unes aux autres de manière mécanique les sections de recouvrement (125) agencées de manière décalée du second agencement (120),
- dans lequel la section d'appui (130) est reliée de manière mécanique à la première plaque de distribution (85),
- dans lequel la seconde plaque de distribution (90) est de manière préférée réalisée d'une seule pièce et avec une homogénéité de matière,
- dans lequel le second agencement (120) constitué de sections de recouvrement (125) est de manière préférée estampé dans la seconde plaque de distribution (90).

3. Réacteur à lit fluidisé (10) selon l'une quelconque des revendications précédentes,
- dans lequel la première plaque de distribution (85) et la section de recouvrement (125) délimitent respectivement une chambre (165),
- dans lequel la chambre (165) s'étend entre la première ouverture de passage (100) et la seconde ouverture de passage (170) de manière parallèle à la première plaque de distribution (85) dans la seconde direction (x, y).

4. Réacteur à lit fluidisé (10) selon la revendication 3,
- dans lequel la chambre (165) présente une surface de section transversale de chambre, la première ouverture de passage (100) présente une première surface de section transversale et la seconde ouverture de passage (170) présente une seconde surface de section transversale,
- dans lequel la seconde surface de section transversale est supérieure à la première surface de section transversale,
- dans lequel la surface de section transversale de la chambre est supérieure à la seconde surface de section transversale.

5. Réacteur à lit fluidisé (10) selon la revendication 3 ou 4,
- dans lequel la chambre (165) présente une longueur de chambre (1) dans la seconde direction (x, y) entre la première ouverture de passage (100) et la seconde ouverture de passage (170),
- dans lequel la seconde ouverture de passage (170) présente une hauteur d'ouverture (h) dans la première direction (z),
- dans lequel la hauteur d'ouverture (h) de la seconde ouverture de passage (170) est inférieure à la longueur de chambre (1) de la chambre (165),
- dans lequel un rapport de la longueur de chambre (1) sur la hauteur d'ouverture (h) est de manière préférée compris entre 1 et 20 inclus.

6. Réacteur à lit fluidisé (10) selon l'une quelconque des revendications précédentes,
- dans lequel la seconde plaque de distribution (90) recouvre, de manière préférée presque complètement, une première face supérieure (110) de la première plaque de distribution (85) de manière inclinée par rapport à la première face supérieure (110) essentiellement dans la première direction (z) au moins dans la région du premier agencement (95).

7. Réacteur à lit fluidisé (10) selon l'une quelconque des revendications précédentes,
- dans lequel le fond de distribution (20) présente une première région (200) et au moins une deuxième région (205),
- dans lequel, dans la première région (200), les secondes ouvertures de passage (170) du second agencement (120) présentent respectivement une première orientation identique,
- dans lequel, dans la deuxième région (205), les secondes ouvertures de passage (170) du second agencement (120) présentent respectivement une deuxième orientation différente de la première orientation.

8. Réacteur à lit fluidisé (10) selon la revendication 7,
- présentant une ouverture de remplissage (35) débouchant dans la chambre de réacteur (30) et une ouverture de prélèvement (40) débouchant dans la chambre de réacteur (30),
- dans lequel l'ouverture de remplissage (35) est agencée en face de l'ouverture de prélèvement (40) et les fines de minerai (55) peuvent être transportées dans la chambre de réacteur (30) en passant par l'ouverture de remplissage (35),
- dans lequel un produit de réaction (75) issu d'une réaction entre les fines de minerai (55) et le gaz de réaction (60) peut être transporté hors de la chambre de réacteur (30) par l'intermédiaire de l'ouverture de prélèvement (40),
- dans lequel la première région (200) est agencée entre l'ouverture de remplissage (35) et l'ouverture de prélèvement (40),
- dans lequel, dans la première région (200), la seconde ouverture de passage (170) est agencée respectivement sur un côté de la section de recouvrement (125) tourné vers l'ouverture de prélèvement (40).

9. Réacteur à lit fluidisé (10) selon la revendication 7 ou 8,
- dans lequel la seconde région (205) est agencée entre l'ouverture de remplissage (35) et la première région (200),
- dans lequel la seconde ouverture de passage (170) est agencée dans la deuxième région (205) sur un côté opposé à l'ouverture de remplissage (35) et sur un côté tourné vers un bord latéral (215, 220) du fond de distribution (20) de telle manière que les fines de minerai (55) peuvent être distribuées à partir de l'ouverture de remplissage (35) en direction du bord latéral (215, 220) au moyen du gaz de réaction (60) en train de sortir.

10. Réacteur à lit fluidisé (10) selon l'une quelconque des revendications 7 à 9,
- dans lequel le fond de distribution (20) présente une troisième région (210),
- dans lequel la troisième région (210) est agencée entre la première région (200) et l'ouverture de prélèvement (40),
- dans lequel, dans la troisième région (210), les secondes ouvertures de passage (170) présentent respectivement une troisième orientation différente de la première orientation,
- dans lequel la seconde ouverture de passage (170) dans la troisième région (210) est agencée respectivement sur un côté tourné vers l'ouverture de prélèvement (40) et sur un côté de la section de recouvrement (125) opposé à un bord latéral (215, 220) du fond de distribution (20) de telle manière que les fines de minerai (55) et/ou un produit de réaction (75) issu d'une réaction entre les fines de minerai (55) et le gaz de réaction (60) peu(ven)t être transporté(s) à partir du bord latéral (215, 220) en direction de l'ouverture de prélèvement (40) au moyen du gaz de réaction (60) en train de sortir.

11. Réacteur à lit fluidisé (10) selon l'une quelconque des revendications 7 à 10,
- dans lequel le fond de distribution (20) présente au moins une région de bord (235, 240),
- dans lequel la région de bord (235, 240) est agencée entre la première région (200) et l'ouverture de prélèvement (40) et est latéralement adjacente à un bord latéral (215, 220) du fond de distribution (20),
- dans lequel la seconde ouverture de passage (170) dans la région de bord (235, 240) est agencée respectivement sur un côté tourné vers l'ouverture de prélèvement (40) et sur un côté de la section de recouvrement (125) opposé à un bord latéral (215, 220) du fond de distribution (20) de telle manière que les fines de minerai (55) et/ou un produit de réaction (75) issu d'une réaction entre les fines de minerai (55) et le gaz de réaction (60) peu(ven)t être transporté(s) en direction de l'ouverture de prélèvement (40) au moyen du gaz de réaction (60) en train de sortir.

12. Réacteur à lit fluidisé (10) selon l'une quelconque des revendications précédentes,
- dans lequel la seconde ouverture de passage (170) est en forme de fente
- dans lequel la seconde ouverture de passage (170) présente une hauteur d'ouverture (h) essentiellement constante dans la première direction (z).

13. Réacteur à lit fluidisé (10) selon l'une quelconque des revendications précédentes,
- dans lequel la première plaque de distribution (85) et la section d'appui (130) sont rendues étanches respectivement autour d'une première ouverture de passage (100) du côté circonférentiel par rapport à la droite (115),
- dans lequel, de manière préférée du côté circonférentiel autour de la première ouverture de passage (100), la section d'appui (130) est respectivement reliée par complémentarité de matière, de manière préférée soudée, à la première plaque de distribution (85).

14. Réacteur à lit fluidisé (10) selon l'une quelconque des revendications précédentes,
- dans lequel la section de recouvrement (125) présente une première sous-région (155) et une seconde sous-région (160),
- dans lequel la première sous-région (155) est agencée de manière parallèle à la première plaque de distribution (85) et recouvre la première ouverture de passage (100),
- dans lequel la première sous-région (155) recouvre au moins par sections la première ouverture de passage (100),
- dans lequel la seconde sous-région (160) est inclinée par rapport à la première sous-région (155) et relie la première sous-région (155) à la section d'appui (130).

15. Procédé de fabrication d'un réacteur à lit fluidisé (10) selon l'une quelconque des revendications précédentes,
- dans lequel la première plaque de distribution (85) avec le premier agencement (95) constitué de premières ouvertures de passage (100) est fournie,
- dans lequel le second agencement (120) comprenant la pluralité de sections de recouvrement (125) est estampé dans un matériau en tôle en forme de plaque et les secondes ouvertures de passage (170) sont découpées, de manière préférée estampées, dans le matériau en tôle, de manière préférée en une seule étape d'usinage,
- dans lequel la seconde plaque de distribution (90) est agencée sur la première plaque de distribution (85) de telle manière que la première ouverture de passage (100) est respectivement recouverte par une section de recouvrement (125) associée,
- dans lequel la section d'appui (130) est reliée de manière mécanique à la première plaque de distribution (85).
